# EUROPÄISCHE PATENTSCHRIFT

(11) **EP 1 126 592 B1**
(45) Veröffentlichungstag und Bekanntmachung des Hinweises auf die Patenterteilung: **13.07.2005**
(21) Anmeldenummer: 01102008.8
(22) Anmeldetag: 30.01.2001
(51) Int. Cl.: H02M 7/48, H02J 3/38

(54) **Elektrische Schaltung zur Steuerung einer Mehrzahl parallelgeschalteter Umrichter**
Electric circuit for controlling a plurality of parallel connected inverters
Circuit électrique pour commander une pluralité d'onduleurs connectés en parallèle

(30) Priorität: 02.02.2000 DE 10004504
(43) Veröffentlichungstag der Anmeldung: 22.08.2001
(73) Patentinhaber: Alstom, 75116 Paris (FR)
(72) Erfinder: Jakob, Roland, 12524 Berlin (DE); Moll, Bernd, 10717 Berlin (DE)
(74) Vertreter: Dreiss, Fuhlendorf, Steimle & Becker

(56) Entgegenhaltungen:
- DE-A- 3 840 806
- US-A- 4 886 981
- US-A- 5 757 634
- RICHARDS D: "A NEW CONCEPT IN MODULAR MOTOR DRIVE SYSTEMS" DRIVES 1. BRIGHTON, SEPT. 13 - 16, 1993, PROCEEDINGS OF THE EUROPEAN CONFERENCE ON POWER ELECTRONICS AND APPLICATIONS, LONDON, IEE, GB, Bd. 5 CONF. 5, 13. September 1993 (1993-09-13), Seiten 179-181, XP000416891

## Beschreibung

### Stand der Technik

Die Erfindung geht aus von einer elektrischen Schaltung zur Steuerung einer Mehrzahl parallelgeschalteter Umrichter, mit einer Steuereinheit, die mit einer ersten Verteileinheit verbunden ist, und mit mindestens einer zweiten Verteileinheit, die zu der ersten Verteileinheit parallel geschaltet ist, wobei die Steuereinheit zur Steuerung parallelgeschalteter Verteileinheiten geeignet ist, und wobei die erste und die zweite Verteileinheit zur Steuerung durch die Steuereinheit vorgesehen sind. Die Erfindung betrifft ebenfalls ein Verfahren zur Steuerung einer Mehrzahl parallelgeschalteter Umrichter.

Beispielsweise zum Betreiben eines Elektromotors mit einer großen Leistung kann es erforderlich sein, eine Mehrzahl von Umrichtern parallel zu schalten. Es ist dann eine elektrische Schaltung erforderlich, die in der Lage ist, die Mehrzahl der Umrichter korrekt anzusteuern.

Aus der Veröffentlichung von V. Netzold, "Multiparalleling of IGBT Inverters for High Output Power", in "Power Electronics and Variable Speed Drives", 21 -23 September 1998, Conference Publication No.456, IEE 1998 ist es bekannt, zur Leistungssteigerung acht IGBT-Inverter parallel zu schalten. Jeder der acht IGBT-Inverter ist an eine Verteilschnittstelle angeschlossen, die ihrerseits parallel miteinander verbunden sind. Eine dieser Verteilschnittstellen ist an eine Steuereinheit angeschlossen.

Die Steuereinheit erzeugt die für die Ansteuerung der IGBT-Umrichter erforderlichen Steuersignale. Diese Steuersignale werden von den Verteilschnittstellen an die jeweiligen IGBT-Umrichter verteilt. Aufgrund der acht anzusteuernden IGBT-Umrichter ist es erforderlich, dass die Steuereinheit dazu geeignet sein muss, die Steuersignale für acht Umrichter korrekt zu erzeugen.Ebenfalls müssen die Verteilschnittstellen dazu geeignet sein, die genannten Steuersignale, Rückmeldesignale und Istwerte für die acht Umrichter korrekt zu verteilen bzw. zu verknüpfen.

Sind jedoch z.B. sechs Umrichter für die zu erzeugende Leistung ausreichend, so hat dies zur Folge, dass entweder die vorstehend beschriebene Steuereinheit überdimensioniert ist oder eine andere Steuereinheit verwendet werden muss. Werden umgekehrt mehr als acht Umrichter zur Leistungserzeugung benötigt, so muss in jedem Fall eine andere Steuereinheit verwendet werden. Entsprechendes gilt für die Verteilschnittstellen. Dies ist immer gleichbedeutend mit einem erhöhten Schaltungs- und damit Kostenaufwand.

### Aufgabe und Vorteile der Erfindung

Es ist eine Aufgabe der Erfindung, eine elektrische Schaltung und ein Verfahren zur Steuerung einer Mehrzahl parallelgeschalteter Umrichter zu schaffen, die bzw. das flexibel an den jeweiligen Leistungsbedarf angepasst werden kann.

Diese Aufgabe wird bei einer elektrischen Schaltung der eingangs genannten Art erfindungsgemäß dadurch gelöst, dass die erste Verteileinheit ebenfalls zur Steuerung parallelgeschalteter Verteileinheiten geeignet ist, und dass eine dritte Verteileinheit vorgesehen ist, die mit der ersten Verteileinheit verbunden ist, und die zur Steuerung durch die erste Verteileinheit vorgesehen ist. Bei einem erfindungsgemäßen Verfahren wird die Aufgabe entsprechend gelöst.

Durch die Erfindung wird es ermöglicht, dass die Verteileinheiten in mindestens zwei Ebenen angeordnet werden können. Die Verteileinheiten können also nicht nur parallelgeschaltet werden, wie dies beim Stand der Technik der Fall ist, sondern zusätzlich auch hintereinander bzw. in Serie.

Es kann damit ausgehend von einer beliebigen Verteileinheit eine aus mindestens zwei Ebenen bestehende Hierarchie bzw. Kaskade erzeugt werden, an deren letzten Verteileinheiten dann die Umrichter angeschlossen sind. Diese Kaskade kann dabei von jeder vorhandenen Verteileinheit ausgehen. Ebenfalls können dabei mehrere Kaskaden von mehreren, insbesondere parallel zueinander angeordneten Verteileinheiten ausgehen.

Damit ist es möglich, durch eine entsprechende Anordnung der Verteileinheiten nahezu jede beliebige erwünschte Anzahl von Umrichtern anzusteuern. Dies bedeutet gleichzeitig, dass durch eine entsprechende Anordnung der Verteileinheiten nahezu jede beliebige Leistung erzeugt bzw. gesteuert werden kann.

Die Steuereinheit kann nunmehr beispielsweise zur Ansteuerung von zwei Verteileinheiten vorgesehen sein. Aufgrund der möglichen Kaskadierung kann jede der beiden Verteileinheiten wiederum zur Ansteuerung von zwei weiteren Verteileinheiten vorgesehen sein. Daraus ergeben sich zwei Ebenen von Verteileinheiten. Mit der entstehenden elektrischen Schaltung können insgesamt vier Umrichter angesteuert werden. Mit Hilfe einer weiteren dritten Ebene können insgesamt acht Umrichter angesteuert werden. Die Steuereinheit und jede der Verteileinheiten muss dabei jedoch nur zur Ansteuerung von jeweils zwei Verteileinheiten geeignet sein. Dies stellt einen stark reduzierten Schaltungs- und damit Kostenaufwand dar.

Ersichtlich kann die erfindungsgemäße elektrische Schaltung beliebig erweitert werden, ohne dass hierbei eine Änderung der Steuereinheit oder der Verteileinheiten erforderlich wäre. Die erfindungsgemäße Schaltung ist damit äußerst flexibel. Ebenfalls kann die erfindungsgemäße Schaltung auch für die Ansteuerung von nur zwei Umrichtern eingesetzt werden, ohne dass dabei eine Überdimensionierung des Steuergeräts vorhanden wäre.

Es versteht sich, dass die Steuereinheit auch zur Ansteuerung von drei oder mehr Verteileinheiten vorgesehen sein kann. Entsprechendes kann für die Verteileinheiten gelten. Daraus ergeben sich dann entsprechende Möglichkeiten für den Aufbau einer oder mehrerer Kaskaden mit daran angeschlossenen Umrichtern. Wiederum kann die gesamte elektrische Schaltung flexibel an die jeweils erwünschten Leistungserfordernisse angepasst werden.

Damit ist es möglich, mit einer schaltungstechnisch einfachen Steuereinheit sowie mit schaltungstechnisch ebenfalls einfachen Verteileinheiten nahezu jede beliebige Anzahl von Umrichtern anzusteuern und damit nahezu jede beliebige erwünschte Leistung zur Verfügung zu stellen.

Besonders vorteilhaft ist es dabei, wenn die Verteileinheiten identisch aufgebaut sind. Eine Anpassung an die konkrete Anlage, z.B. die Anzahl der parallelgeschalteten Umrichter, ist durch Jumper o.ä. möglich. Damit wird der Schaltungsaufwand und die Kosten für die erfindungsgemäße Schaltung weiter vermindert. Entsprechendes gilt, wenn die Umrichter ebenfalls identisch aufgebaut sind.

Ebenfalls ist es besonders vorteilhaft, wenn die Steuereinheit sowohl zur Steuerung einer Verteileinheit, als auch zur Steuerung eines Umrichters geeignet ist. Damit kann die Steuereinheit nicht nur bei der erfindungsgemäßen Schaltung, sondern auch zur einfachen Ansteuerung eines einzelnen Umrichters verwendet werden.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

Ausführungsbeispiele der Erfindung
- Figur 1: zeigt ein schematisches Blockschaltbild eines ersten Ausführungsbeispiels einer erfindungsgemäßen elektrischen Schaltung, und
- Figur 2: zeigt ein schematisches Blockschaltbild eines zweiten Ausführungsbeispiels einer erfindungsgemäßen elektrischen Schaltung.

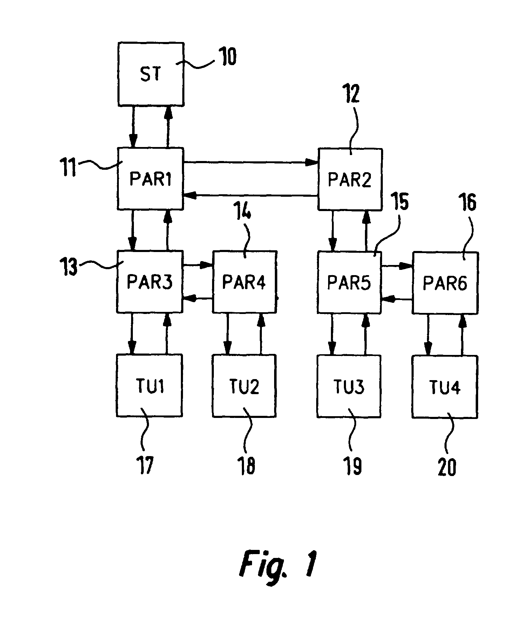

In der Figur 1 ist eine elektrische Schaltung dargestellt, die zum Betreiben einer Last, z.B. eines Elektromotors mit einer großen Leistung vorgesehen ist. Die Schaltung 10 weist eine Steuereinheit (ST) 10, sechs Verteileinheiten (PAR) 11, 12, 13, 14, 15, 16 und vier Umrichter (TU) 17, 18, 19, 20 auf.

Die Steuereinheit 10 ist mit der ersten Verteileinheit 11 verbunden, die ihrerseits zu der zweiten Verteileinheit 12 parallelgeschaltet ist. An die erste Verteileinheit 11 ist die dritte Verteileinheit 13 angeschlossen, zu der ihrerseite die vierte Verteileinheit 14 parallelgeschaltet ist. An die zweite Verteileinheit 12 ist die fünfte Verteileinheit 15 angeschlossen, zu der ihrerseite die sechste Verteileinheit 16 parallelgeschaltet ist. An die Verteileinheiten 13, 14, 15, 16 ist jeweils einer der Umrichter 17, 18, 19, 20 angeschlossen.

Die Steuereinheit 10 ist dazu geeignet, maximal zwei parallelgeschaltete Verteileinheiten zu steuern. In der Figur 1 ist die Steuereinheit 10 dazu vorgesehen, die beiden Verteileinheiten 11, 12 zu steuern. Hierzu werden Steuersignale in beide Richtungen zwischen der Steuereinheit 10 und der ersten Verteileinheit 11 sowie zwischen der ersten und der zweiten Verteileinheit 11, 12 übertragen.

Jede der beiden Verteileinheiten 11, 12 ist dazu geeignet, ebenfalls maximal zwei parallelgeschaltete weitere Verteileinheiten zu steuern. In der Figur 1 ist die Verteileinheit 11 dazu vorgesehen die beiden Verteileinheiten 13, 14 und die Verteileinheit 12 die beiden Verteileinheiten 15, 16 zu steuern. Hierzu werden wiederum Steuersignale in beide Richtungen ausgetauscht, und zwar zwischen der ersten Verteileinheit 11 und der dritten Verteileinheit 13, zwischen der zweiten Verteileinheit 12 und der fünften Verteileinheit 15, sowie zwischen der dritten und der vierten Verteileinheit 13, 14 und der fünften und der sechsten Verteileinheit 15, 16.

Durch die vorbeschriebene und in der Figur 1 dargestellte Anordnung der Verteileinheiten 11 bis 16 entstehen zwei Ebenen. Die erste Ebene wird von den parallelgeschalteten Verteileinheiten 11, 12 und die zweite Ebene von den parallelgeschalteten Verteileinheiten 13 bis 16 gebildet. In der zweiten Ebene sind dabei zwei Kaskaden vorhanden, nämlich einerseits die beiden Verteileinheiten 13, 14 und andererseits die beiden Verteileinheiten 15, 16.

Die beiden Verteileinheiten 11, 12 der ersten Ebene werden von der Steuereinheit 10 gesteuert. Die vier Verteileinheiten 13 bis 16 der zweiten Ebene werden von den beiden Verteileinheiten 11, 12 der ersten Ebene gesteuert. Zu diesem Zweck verhalten sich die beiden Verteileinheiten 11, 12 der ersten Ebene im Hinblick auf die Verteileinheiten der zweiten Ebene wie Steuereinheiten. Die beiden Verteileinheiten 13, 14 der einen Kaskade "sehen" also in der Verteileinheit 11 eine Steuereinheit. Entsprechendes gilt für die andere Kaskade.

Von den vier Verteileinheiten 13 bis 16 der zweiten Ebene werden dann die vier Umrichter 17 bis 20 angesteuert, an die die zu betreibende Last angeschlossen ist.

Die insgesamt sechs Verteileinheiten 11 bis 16 sind identisch aufgebaut. Damit ist es möglich, weitere Verteileinheiten in der Form weiterer Ebenen an die Verteileinheiten 13 bis 16 der zweiten Ebene anzuschließen, um damit die Anzahl der betreibbaren Umrichter weiter zu erhöhen. Ebenfalls wird dadurch der erforderliche Aufwand für die einzelnen Verteileinheiten minimiert.

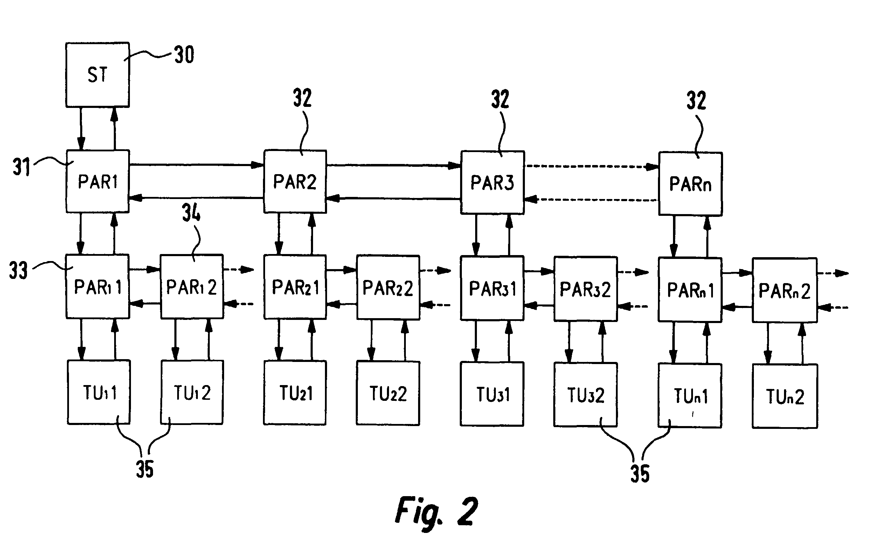

In der Figur 2 ist eine elektrische Schaltung gezeigt, die eine Verallgemeinerung der elektrischen Schaltung der Figur 1 darstellt.

Eine Steuereinheit 30 ist mit einer Verteileinheit 31 verbunden, zu der ihrerseits mehrere Verteileinheiten 32 parallelgeschaltet sind. Die Verteileinheiten 31, 32 bilden eine erste Ebene. Die Anzahl der Verteileinheiten 31, 32 in der ersten Ebene ist n. Die Steuereinheit 30 ist dazu geeignet, die Anzahl n der in der ersten Ebene angeordneten Verteileinheiten 31, 32 anzusteuern. In der Figur 2 ist n=4.

Jeder der Verteileinheiten 31, 32 der ersten Ebene ist eine Kaskade weiterer Verteileinheiten nachgeordnet.

So ist beispielhaft die Verteileinheit 31 mit einer Verteileinheit 33 verbunden, zu der ihrerseits mehrere Verteileinheiten 34 parallelgeschaltet sind. Die Verteileinheiten 33, 34 bilden in dieser Kaskade eine zweite Ebene. Die Anzahl der Verteileinheiten 33, 34 in der zweiten Ebene dieser Kaskade ist wiederum n. Diese Anzahl kann aber auch von n abweichen. Die Verteileinheit 31 der ersten Ebene ist dazu geeignet, die Anzahl n der in dieser Kaskade der zweiten Ebene angeordneten Verteileinheiten 33, 34 anzusteuern.

Entsprechendes gilt für die anderen Kaskaden, die den anderen Verteileinheiten 32 der ersten Ebene nachgeordnet sind.

Jeder der Verteileinheiten der zweiten Ebene kann eine weitere Kaskade weiterer Verteileinheiten nachgeordnet sein. Die Anzahl der Ebenen ist k. In der Figur 2 ist k=2.

An die Verteileinheiten der letzten Ebene sind dann die Umrichter 35 angeschlossen. Die Anzahl der Umrichter 35 ergibt sich maximal zu n^{k}. In der Figur 2 können damit maximal 4²=16 Umrichter 35 angesteuert werden.

Die Verteileinheiten 31, 32, 33, 34 und die Umrichter 35 sind jeweils identisch aufgebaut.

Durch eine entsprechende Wahl von n und k ist es möglich, nahezu jede beliebige Anzahl von Umrichtern anzusteuern und damit nahezu jegliche Leistung zur Verfügung zu stellen.

## Patentansprüche

1. Elektrische Schaltung zur Steuerung einer Mehrzahl parallelgeschalteter Umrichter (35), mit einer zur Erzeugung von Steuersignalen vorgesehenen Steuereinheit (30), die mit einer ersten Ebene von parallelgeschalteten Verteileinheiten verbunden ist, **dadurch gekennzeichnet, dass** mindestens einer der Verteileinheiten der ersten Ebene eine Kaskade weiterer parallelgeschalteter Verteileinheiten nachgeordnet ist, die eine zweite Ebene bilden, dass mindestens einer der Verteileinheiten der zweiten Ebene eine Kaskade weiterer parallelgeschalteter Verteileinheiten nachgeordnet sein kann, und dass an den Verteileinheiten der letzten Ebene die Umrichter (35) angeschlossen sind.

2. Elektrische Schaltung nach Anspruch 1, **dadurch gekennzeichnet, dass** die Steuereinheit (30) mit einer ersten Verteileinheit (31) verbunden ist, dass eine zweite Verteileinheit (32) vorgesehen ist, die mit der ersten Verteileinheit (31) verbunden ist, dass die Steuereinheit (30) die erste und die zweite Verteileinheit (31, 32) steuert, dass eine dritte Verteileinheit (33) vorgesehen ist, die mit der ersten Verteileinheit (31) verbunden ist, dass eine vierte Verteileinheit (34) vorgesehen ist, die mit der dritten Verteileinheit (33) verbunden ist, dass die erste Verteileinheit (31) die dritte und die vierte Verteileinheit (33,34) steuert, und dass die dritte und die vierte Verteileinheit (33, 34) jeweils mit einem der Umrichter (35) gekoppelt sind, wobei die erste und die zweite Verteileinheit (31, 32) zueinander parallel geschaltet sind und eine erste Ebene bilden, die dritte und die vierte Verteileinheit (33, 34) zueinander parallel geschaltet sind und eine zweite Ebene bilden, und die dritte und die vierte Verteileinheit (33, 34) eine Kaskade zu der ersten Verteileinheit (31) bilden.

3. Elektrische Schaltung nach Anspruch 2, **dadurch gekennzeichnet, dass** eine fünfte und eine sechste Verteileinheit vorgesehen sind, die mit der zweiten Verteileinheit (32) verbunden sind, dass die zweite Verteileinheit (32) die fünfte und die sechste Verteileinheit steuert, wobei die fünfte und die sechste Verteileinheit zu der zweiten Ebene gehören, und die fünfte und die sechste Verteileinheit eine Kaskade zu der zweiten Verteileinheit (32) bilden.

4. Elektrische Schaltung nach einem der Ansprüche 2 oder 3, **dadurch gekennzeichnet, dass** an die dritte und/oder an die vierte und/oder an die fünfte und/oder an die sechste Verteileinheit eine weitere Verteileinheit angeschlossen ist.

5. Elektrische Schaltung nach einem der Ansprüche 2 bis 4, **dadurch gekennzeichnet, dass** an die dritte und/oder an die vierte und/oder an die fünfte und/oder an die sechste und/oder an die weitere Verteileinheit einer der Umrichter angeschlossen ist.

6. Elektrische Schaltung nach einem der vorstehenden Ansprüche, **dadurch gekennzeichnet, dass** die Verteileinheiten (31, 32, 33, 34) identisch aufgebaut sind.

7. Elektrische Schaltung nach einem der vorstehenden Ansprüche, **dadurch gekennzeichnet, dass** mit der Steuereinheit (30) sowohl die Verteileinheit (31), als auch einer der Umrichter (35) steuerbar ist.

## Claims

1. Electric circuit for controlling a plurality of parallel connected inverters (35), having a control unit (30) provided for generating control signals, which is linked to a first level of parallel connected distributor units, **characterised in that** assigned to at least one of the distributor units of the first level is a cascade of further parallel connected distributor units, which comprise a second level, that a cascade of further parallel connected distributor units may be subordinated to at least one of the distributor units of the second level, and that the inverters (35) are connected to the distributor units of the last level.

2. Electric circuit according to claim 1, **characterised in that** the control unit (30) is linked to a first distributor unit (31), that a second distributor unit (32) is provided, which is linked to the first distributor unit (31), that the control unit (30) controls the first and second distributor unit (31, 32), that a third distributor unit (33) is provided, which is linked to the first distributor unit (31), that a fourth distributor unit (34) is provided, which is linked to the third distributor unit (33), that the first distributor unit (31) controls the third and fourth distributor units (33, 34), and that the third and fourth distributor units (33, 34) are each coupled to one of the inverters (35), whereby the first and second distributor units (31, 32) are connected parallel to each other and comprise a first level, the third and fourth distributor units (33, 34) are connected in parallel to each other and comprise a second level, and the third and fourth distributor units (33, 34) comprise a cascade to the first distributor unit (31).

3. Electric circuit according to claim 2, **characterised in that** a fifth and sixth distributor unit are provided, which are linked to the second distributor unit (32), that the second distributor unit (32) controls the fifth and the sixth distributor unit, whereby the fifth and sixth distributor units belong to the second level and the fifth and sixth distributor units comprise a cascade to the second distributor unit (32).

4. Electric circuit according to one of the claims 2 or 3, **characterised in that** a further distributor unit is connected to the third and/or the fourth and/or the fifth and/or the sixth distributor unit.

5. Electric circuit according to one of the claims 2 to 4, **characterised in that** one of the inverters is connected to the third and/or the fourth and/or the fifth and/or the sixth and/or the further distributor unit.

6. Electric circuit according to one of the previous claims, **characterised in that** the distributor units (31, 32, 33, 34) are identically designed.

7. Electric circuit according to one of the previous claims, **characterised in that** both the distributor unit (31) and also one of the inverters (35) are controllable with the control unit (30).

## Revendications

1. Circuit électrique servant à commander une pluralité d'onduleurs (35) montés en parallèle, comprenant une unité de commande (30), prévue pour générer des signaux de commande, qui est reliée à un premier étage d'unités de distribution montées en parallèle, **caractérisé en ce qu'**une cascade d'autres unités de distribution montées en parallèle et formant un deuxième étage est subordonnée à l'une au moins des unités de distribution du premier étage, **en ce qu'**une cascade d'autres unités de distribution montées en parallèle peut être subordonnée à l'une au moins des unités de distribution du deuxième étage et **en ce que** les onduleurs (35) sont reliés aux unités de distribution du dernier étage.

2. Circuit électrique selon la revendication 1, **caractérisé en ce que** l'unité de commande (30) est reliée à une première unité de distribution (31), **en ce qu'**il est prévu une deuxième unité de distribution (32) qui est reliée à la première unité de distribution (31), **en ce que** l'unité de commande (30) commande la première et la deuxième unités de distribution (31, 32), **en ce qu'**il est prévu une troisième unité de distribution (33) qui est reliée à la première unité de distribution (31), **en ce qu'**il est prévu une quatrième unité de distribution (34) qui est reliée à la troisième unité de distribution (33) qui commande la première unité de distribution (31), **en ce que** la première unité de commande (31) commande la troisième et la quatrième unités de distribution (33, 34) et **en ce que** la troisième et la quatrième unités de distribution (33, 34) sont couplées chacune avec l'un des onduleurs (35), la première et la deuxième unités de distribution (31, 32) étant montées en parallèle l'une à l'autre et formant un premier étage, la troisième et la quatrième unités de distribution (33, 34) étant montées en parallèle l'une à l'autre et formant un deuxième étage et la troisième et la quatrième unités de distribution (33, 34) formant une cascade par rapport à la première unité de distribution (31).

3. Circuit électrique selon la revendication 2, **caractérisé en ce qu'**il est prévu une cinquième et une sixième unités de distribution qui sont reliées à la deuxième unité de distribution (32), **en ce que** la deuxième unité de distribution (32) commande la cinquième et la sixième unités de distribution, la cinquième et la sixième unités de distribution appartenant au deuxième étage et la cinquième et la sixième unités de distribution formant une cascade par rapport à la deuxième unité de distribution (32).

4. Circuit électrique selon l'une des revendications 2 ou 3, **caractérisé en ce qu'**une autre unité de distribution est reliée à la troisième et/ou à la quatrième et/ou à la cinquième et/ou à la sixième unité de distribution.

5. Circuit électrique selon l'une des revendications 2 à 4, **caractérisé en ce que** l'un des onduleurs est relié à la troisième et/ou à la quatrième et/ou à la cinquième et/ou à la sixième et/ou à l'autre unité de distribution.

6. Circuit électrique selon l'une des revendications précédentes, **caractérisé en ce que** les unités de distribution (31, 32, 33, 34) sont de structure identique.

7. Circuit électrique selon l'une des revendications précédentes, **caractérisé en ce que** l'unité de commande (30) permet de commander l'unité de distribution (31) de même que l'un des onduleurs (35).
